# EUROPÄISCHE PATENTSCHRIFT

(11) **EP 3 344 905 B1**
(45) Veröffentlichungstag und Bekanntmachung des Hinweises auf die Patenterteilung: **29.01.2020**
(21) Anmeldenummer: 16745448.7
(22) Anmeldetag: 26.07.2016
(51) Int. Cl.: F16K 31/53, F02M 26/54, F02M 26/67

(54) **VENTIL**
VALVE
SOUPAPE

(30) Priorität: 31.08.2015 DE 102015216640
(43) Veröffentlichungstag der Anmeldung: 11.07.2018
(73) Patentinhaber: Vitesco Technologies GmbH, 30165 Hannover (DE)
(72) Erfinder: MIKOLAJEK, Carsten, 64347 Griesheim (DE)
(86) Internationale Anmeldenummer: PCT/EP2016/067746
(87) Internationale Veröffentlichungsnummer: WO 2017/036677

(56) Entgegenhaltungen:
- EP-A2- 1 372 128
- WO-A1-02/16698
- US-A- 2 916 922
- US-A- 3 955 792
- US-A- 4 613 798
- US-A1- 2014 311 464

## Beschreibung

### Technisches Gebiet

Die Erfindung betrifft ein Ventil zum Öffnen und Schließen einer Strömungsstrecke, mit einem Antriebsmotor, mit einem Ventilteller, mit einem Ventilstößel und mit einer Übersetzungsvorrichtung zur Übersetzung einer Rotationsbewegung des Antriebsmotors in eine translatorische Bewegung des Ventiltellers, wobei der Ventilteller mit dem Ventilstößel verbunden ist und durch eine Bewegung des Ventilstößels bewegbar ist, wobei die Übersetzungsvorrichtung aus flexiblen Elementen und zumindest einem Zahnsegment gebildet ist, welches um eine Drehachse drehbar gelagert ist, wobei durch die flexiblen Elemente nur Zugkräfte übertragbar sind und wobei das Zahnsegment durch eine Drehbewegung zumindest teilweise von dem flexiblen Elementen umschlingbar ist.

### Stand der Technik

In einer Vielzahl von Anwendungsbereichen werden zum Zwecke der Betätigung eines Ventils Rotationsbewegungen eines Antriebsmotors in eine lineare beziehungsweise eine translatorische Bewegung übersetzt. Dieses Prinzip wird beispielsweise auch bei Ventilen zur Steuerung der Abgasrückführung in Kraftfahrzeugen angewendet. Hierzu wird oftmals eine Getriebeübersetzung genutzt, die mit einer entsprechenden Kinematik die Drehbewegung in eine lineare beziehungsweise translatorische Bewegung übersetzt. Die Übersetzung der Drehbewegung kann beispielsweise über einen Kurbelantrieb oder ein Kulissengetriebe realisiert werden.

Die US 3 955 792 A offenbart einen Antriebsmechanismus für einen Ventilkörper mit einer Seiltrommel. Die Seiltrommel wird von einem Motor über eine Getriebebox angetrieben. Ein Kabel ist auf der Seiltrommel aufgewickelt und am freien Ende eines mit dem Ventilkörper verbundenen Ventilstößels befestigt. Für die reibungsarme Bewegung muss das Seil genau mit der Achse des Ventilstößels fluchten.

Die US 4 613 798 A offenbart ein elektrisch antreibbares Ventil. Zwischen dem elektrischen Antrieb und dem Ventil ist ein flexibles Element angeordnet.

Nachteilig an solchen Vorrichtungen ist insbesondere, dass unerwünschte Querkräfte entstehen, die auf den Ventilstößel oder den Ventilteller übertragen werden können. Dies führt zu einer höheren Abnutzung und zu einer reduzierten Lebensdauer. Außerdem kann es zu einem Verkanten des Ventils kommen.

### Darstellung der Erfindung, Aufgabe, Lösung, Vorteile

Daher ist es die Aufgabe der vorliegenden Erfindung, ein Ventil zu schaffen, bei welchem eine Drehbewegung eines Antriebsmotors in eine lineare Bewegung umgesetzt wird, wobei die entstehenden Querkräfte und Drehmomente am Ventilstößel möglichst minimal sind.

Die Aufgabe hinsichtlich des Ventils wird durch ein Ventil mit den Merkmalen von Anspruch 1 gelöst.

Ein Ausführungsbeispiel der Erfindung betrifft ein Ventil zum Öffnen und Schließen einer Strömungsstrecke, mit einem Antriebsmotor, mit einem Ventilteller, mit einem Ventilstößel und mit einer Übersetzungsvorrichtung zur Übersetzung einer Rotationsbewegung des Antriebsmotors in eine translatorische Bewegung des Ventiltellers, wobei der Ventilteller mit dem Ventilstößel verbunden ist und durch eine Bewegung des Ventilstößels bewegbar ist, wobei die Übersetzungsvorrichtung aus flexiblen Elementen und zumindest einem Zahnsegment gebildet ist, welches um eine Drehachse drehbar gelagert ist, wobei durch die flexiblen Elemente nur Zugkräfte übertragbar sind und wobei das Zahnsegment durch eine Drehbewegung zumindest teilweise von dem flexiblen Elementen umschlingbar ist.

Die Übersetzungsvorrichtung ist besonders bevorzugt derart drehbar gelagert, dass das Zahnsegment über ein Getriebe oder direkt von einem Antriebsmotor, wie insbesondere einem Elektromotor, angetrieben werden kann. Durch die am Zahnsegment erzeugte Drehbewegung kann ein Aufwickeln beziehungsweise Abwickeln der flexiblen Elemente, die ebenfalls mit dem Ventilstößel verbunden sind, am Zahnsegment erreicht werden, wodurch letztlich eine translatorische Bewegung des Ventilstößels erzeugt werden kann.

Das Zahnsegment kann auf vielfältige Weise konstruktiv ausgestaltet sein. Wesentlich ist, dass die durch Antriebsscheiben übertragene Bewegung des Antriebsmotors auf das Zahnsegment, beispielsweise durch eine zwischen dem Zahnsegment und der Antriebsscheibe vorgesehene Verzahnung, übertragen wird und weiterhin das Zahnsegment dazu geeignet ist, die Bewegung mittels flexibler Elemente auf den Ventilstößel zu übertragen. Das Zahnsegment kann hierzu insbesondere aus einer Mehrzahl von einzelnen Elementen gefertigt sein oder zumindest mehrere Bereiche aufweisen, die jeweils unterschiedlichen Funktionen zugeordnet sind. Beispielsweise ein Bogenelement zur Übertragung der Bewegung von den Antriebsscheiben und scheibenförmige Elemente zur Anbindung der flexiblen Elemente.

Die flexiblen Elemente sind bevorzugt beispielsweise Bowdenzüge, die sich insbesondere dadurch kennzeichnen, dass sie im Wesentlichen nur Zugkräfte übertragen können und nur sehr geringe oder überhaupt keine Schubkräfte übertragen können. Durch eine geeignete Anordnung von zumindest zwei flexiblen Elementen kann so die Bewegung des Zahnsegmentes in beiden Drehrichtungen auf den Ventilstößel übertragen werden.

Durch das Verdrehen des Zahnsegmentes kann es zu einer teilweisen Umschlingung mit einem oder beiden flexiblen Elemente kommen, indem die flexiblen Elemente praktisch auf das Zahnsegment aufgewickelt werden. Je nach Drehrichtung kann auch ein bereits aufgewickeltes flexibles Element vom Zahnsegment abgewickelt werden.

Besonders vorteilhaft ist es, wenn die Übersetzungsvorrichtung zumindest zwei flexible Elemente aufweist, wobei durch eine Drehbewegung des Zahnsegmentes in eine Richtung der durch das zumindest erste flexible Element umschlungene Anteil des Zahnsegmentes vergrößerbar ist und der durch das zumindest zweite flexible Element umschlungene Anteil des Zahnsegmentes verkleinerbar ist.

Dies ist besonders vorteilhaft, wenn die Drehbewegung des Antriebsmotors in beide Drehrichtungen jeweils auf das Zahnsegment und letztlich auch auf den Ventilstößel übertragen werden soll. Jeweils eines der flexiblen Elemente ist dabei für die Kraftübertragung in jeweils eine Richtung vorgesehen. Bei einer Drehrichtung im Uhrzeigersinn wird eines der flexiblen Elemente auf Zug belastet, während das jeweils andere entlastet wird. Bei einer Drehrichtungsumkehr wird das jeweils zuerst unbelastete flexible Element auf Zug belastet und das zuerst belastete flexible Element entlastet.

Auch ist es vorteilhaft, wenn das Zahnsegment zwei am äußeren Umfang in Umfangsrichtung umlaufende Nuten aufweist, wobei die flexiblen Elemente zumindest teilweise durch die Nuten geführt sind.

Durch die Nuten kann ein Abrutschen der flexiblen Elemente am Zahnsegment verhindert werden. Auch kann eine bessere Übersetzung der Drehbewegung in eine translatorische Bewegung erreicht werden, da die flexiblen Elemente weniger Bewegungsfreiheit haben und somit das Spiel in der gesamten Vorrichtung verringert wird. In den Nuten können die flexiblen Elemente das Zahnsegment geführt umschlingen, wodurch insgesamt eine höhere Stabilität erreicht wird. Sofern mehrere flexible Elemente vorgesehen sind, kann durch die Nuten auch eine Überlappung der flexiblen Elemente verhindert werden. Das ungewollte entstehen von Querkräften und störenden Momenten kann so auch verhindert werden. Querkräfte sind insbesondere Kräfte, die quer zur gewünschten Bewegungsrichtung des Ventilstößels wirken und somit eine Bewegung erschweren oder zu einem Verkanten des Ventilstößels beziehungsweise des Ventiltellers führen. Störende Momente sind insbesondere Momente, die ebenfalls zu einer von der gewünschten Bewegungsrichtung abweichenden Bewegung des Ventilstößels und des Ventiltellers führen.

Das Ventil ist dadurch gekennzeichnet, dass das Zahnsegment aus zwei scheibenförmigen Elementen gebildet ist, welche starr miteinander verbunden sind, wobei das erste scheibenförmige Element links von dem Ventilstößel angeordnet ist und das zweite scheibenförmige Element rechts von dem Ventilstößel angeordnet ist, wobei jedes der scheibenförmigen Elemente zwei parallel zueinander in Umfangsrichtung verlaufende Nuten am äußeren Umfang aufweist, wobei in jeder der Nuten ein flexibles Element geführt ist.

Die scheibenförmigen Elemente sind bevorzugt links und rechts des Ventilstößels in gleichem Abstand zur Mittelachse des Ventilstößels angeordnet. Dies ist besonders vorteilhaft, um eine gleichmäßige und von Querkräften und störenden Momenten freie Kraftübertragung zu erreichen. Jedes scheibenförmige Element weist zwei Nuten auf, wobei in jeder der Nuten jeweils ein flexibles Element eingreift. Somit sind insgesamt 4 flexible Elemente vorgesehen, wobei jeweils zwei flexible Elemente für die Kraftübertragung in die gleiche Richtung vorgesehen sind. Bevorzugt überträgt jeweils ein flexibles Element auf der rechten und der linken Seite des Ventilstößels die Drehbewegung im Uhrzeigersinn und ebenfalls jeweils ein flexibles Element rechts und links die Drehbewegung entgegen dem Uhrzeigersinn von dem Zahnsegment auf den Ventilstößel.

Auch ist es zu bevorzugen, wenn jedes flexible Element jeweils mit dem Ventilstößel und mit dem Zahnsegment fest verbunden ist. Durch eine feste Anbindung kann eine spielfreie Kraftübertragung erreicht werden.

Darüber hinaus ist es vorteilhaft, wenn die jeweils zwei flexiblen Elemente gegensinnig zueinander angeordnet sind. Die gegensinnige Anordnung ist besonders vorteilhaft, um den Ventilstößel sowohl nach vorne als auch nach hinten bewegen zu können. Jeweils eines der flexiblen Elemente ist hierfür mit einer Zugkraft belastet.

Weiterhin ist es vorteilhaft, wenn das Zahnsegment um eine Drehachse drehbar gelagert ist, wobei die Drehachse des Zahnsegmentes in einer tangentialen Richtung zur Mittelachse des Ventilstößels angeordnet ist. Durch eine solche Anordnung des Zahnsegmentes beziehungsweise der Drehachse des Zahnsegmentes im Vergleich zur Mittelachse des Ventilstößels kann erreicht werden, dass die flexiblen Elemente exakt parallel zur Bewegungsrichtung des Ventilstößels ausgerichtet werden. Dies ist vorteilhaft, um das Auftreten von unerwünschten Querkräften und störenden Momenten zu verhindern oder zumindest zu minimieren.

Auch ist es zweckmäßig, wenn der Achsabstand zwischen der Drehachse des Zahnsegmentes und der Mittelachse des Ventilstößels dem halben Abrolldurchmesser der flexiblen Elemente auf dem Zahnsegment entspricht.

Eine solche Auslegung ist besonders vorteilhaft, weil dadurch erreicht wird, dass die flexiblen Elemente exakt parallel zur Mittelachse des Ventilstößels verlaufen. Hierbei gilt insbesondere die Lage der neutralen Faser der flexiblen Elemente als wichtig, da diese zur Vermeidung von Querkräften und störenden Momenten exakt parallel zur Mittelachs des Ventilstößels angeordnet sein sollte. Die neutrale Faser sollte dabei sowohl von der Seite entlang der Drehachse des Zahnsegmentes als auch von oben in einem rechten Winkel zur Drehachse des Zahnsegmentes betrachtet parallel zur Mittelachse des Ventilstößels verlaufen.

Darüber hinaus ist es vorteilhaft, wenn die flexiblen Elemente durch Bowdenzüge und/oder Seile und/oder Stahlbänder und/oder Rollfedern und/oder Ketten und/oder zugfestes Gewebeband gebildet sind.

Weiterhin ist es zweckmäßig, wenn die flexiblen Elemente an ihrem Anbindungspunkt am Zahnsegment in das Zahnsegment eingespritzt sind. Das Anspritzen beziehungsweise das Einspritzen der flexiblen Elemente in das Zahnsegment ist besonders vorteilhaft, um eine spielfreie Kraftübertragung zu erreichen.

Außerdem ist es vorteilhaft, wenn die Abstände der flexiblen Elemente zur Mittelachse des Ventilstößels rechts und links symmetrisch zueinander sind. Durch eine symmetrische Anordnung der flexiblen Elemente kann insbesondere das Entstehen von unerwünschten Querkräften und störenden Momenten reduziert oder gänzlich vermieden werden. Querkräfte und störende Momente könnten zu einem Verkanten des Ventilstößels oder des Ventiltellers führen. Außerdem wird die Haltbarkeit des Ventils deutlich reduziert.

Insbesondere am Ventilstößel können in radialer Richtung abragende Vorsprünge angeordnet sein, an welche die flexiblen Elemente angebunden sind. Durch eine geeignete Dimensionierung kann somit erreicht werden, dass die flexiblen Elemente exakt parallel zur Mittelachse des Ventilstößels verlaufen.

Auch ist es zu bevorzugen, wenn zumindest eines der flexiblen Elemente durch eine Vorrichtung mit einer Vorspannkraft beaufschlagt ist, wobei die Vorrichtung am Zahnsegment und/oder am Ventilstößel angeordnet ist.

Eine Vorrichtung zur Erzeugung einer Vorspannkraft kann beispielsweise durch eine Feder oder ein federähnliches Element gebildet sein. Die Vorspannkraft dient insbesondere zur Minimierung oder zur Eliminierung des Spiels im Ventil. Das Spiel entsteht durch Fertigungstoleranzen der einzelnen Elemente des Ventils. Durch eine Vorspannkraft können die Elemente derart miteinander in Anlage gebracht werden, dass das Spiel minimiert oder sogar gänzlich eliminiert wird.

Darüber hinaus ist es vorteilhaft, wenn die flexiblen Elemente parallel zur Mittelachse des Ventilstößels verlaufen. Dies ist vorteilhaft, um das ungewollte entstehen von Querkräften und störenden Momenten zu vermeiden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Seitenansicht eines erfindungsgemäßen Ventils, wobei neben dem Ventilstößel und dem Zahnsegment auch eine aus zwei Antriebsscheiben gebildete Getriebestufe abgebildet ist, und
- Fig. 2: eine perspektivische Ansicht der Figur 1, wobei insbesondere die Anordnung der flexiblen Elemente rechts und links des Ventilstößels zu erkennen ist.

### Bevorzugte Ausführung der Erfindung

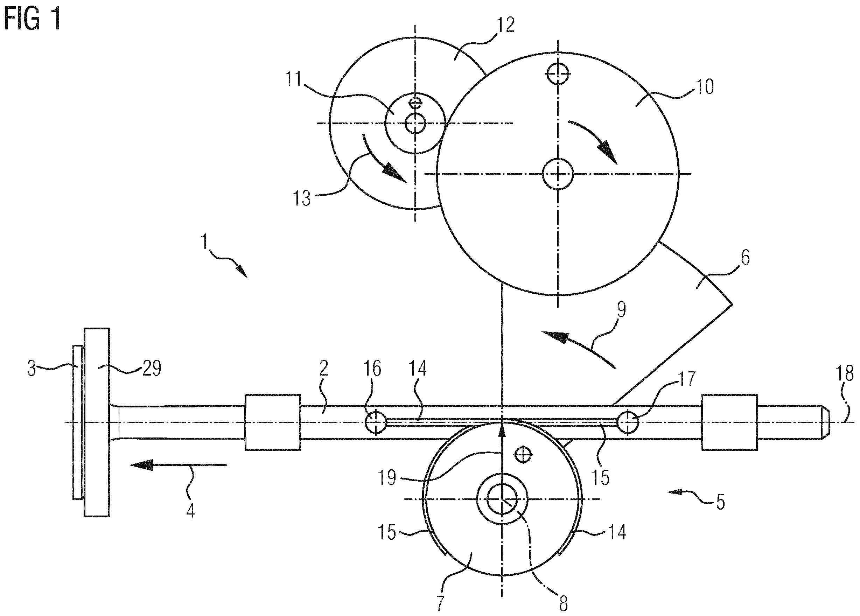

Die Figur 1 zeigt eine Seitenansicht eines erfindungsgemäßen Ventils 1. Das Ventil 1 ist im Wesentlichen aus dem Ventilstößel 2 und dem daran befestigten oder mit dem Ventilstößel 1 einteilig ausgeführten Ventilteller 3 gebildet. In der Figur 1 ist ein Ventilsitz, gegen welchen der Ventilteller 3 gepresst werden kann, durch einen Ring mit dem Bezugszeichen 29 dargestellt. Der Ventilsitz 29 ist Teil einer nicht gezeigten Strömungsstrecke, welche durch den Ventilteller 3 verschlossen werden kann oder freigegeben werden kann. Der Ventilstößel 2 kann entlang der durch den Pfeil 4 gekennzeichneten Richtung und auch entgegengesetzt dieser Richtung bewegt werden.

Weiterhin ist ein Zahnsegment 5 gezeigt, welches das Bogenelement 6 aufweist und zwei scheibenförmige Elemente 7. Das Zahnsegment 5 ist um die Drehachse 8, welche als Flächennormale auf der Zeichnungsebene steht, drehbar gelagert. Das Zahnsegment 5 kann entlang der durch den Pfeil 9 gekennzeichneten Richtung und in die entgegengesetzte Richtung um die Drehachse 8 verdreht werden.

Mit den Bezugszeichen 10 und 11 sind Antriebsscheiben gezeigt, die eine Getriebestufe ausbilden. Die Antriebsscheibe 11 ist mit dem Antriebsmotor 12 verbunden und kann durch diesen sowohl in Richtung des Pfeils 13 als auch in die Gegenrichtung angetrieben werden.

Die Antriebsscheibe 10 rollt auf der Antriebsscheibe 11 ab. Die Drehbewegung der Antriebsscheibe 10 wird schließlich auf das Bogenelement 6 des Zahnsegmentes 5 übertragen. Die jeweiligen Drehsinne ergeben sich nach dem Prinzip der Drehrichtungsumkehr von Antriebsscheibe zu Antriebsscheibe entsprechend der dargestellten Pfeile.

Weiterhin sind in Figur 1 zwei flexible Elemente 14 und 15 dargestellt, welche besonders vorteilhaft als Bowdenzüge ausgeführt sind. Diese flexiblen Elemente 14 und 15 können jeweils nur Zugkräfte übertragen. Die flexiblen Elemente 14 und 15 sind jeweils an einem ihrer Endbereiche mit dem Ventilstößel 2 an den Anbindungspunkten 16 und 17 verbunden und an dem jeweils anderen Endbereich mit dem scheibenförmigen Element 7. Durch eine Drehbewegung des scheibenförmigen Elementes 7 infolge einer Drehbewegung des Antriebsmotors 12 in Richtung des Pfeils 13 wird die Umschlingung des scheibenförmigen Elementes 7 mit dem flexiblen Element 15 erhöht, während die Umschlingung durch das flexible Element 14 verringert wird. Der Ventilstößel 2 wird dadurch entlang des Pfeils 4 nach links bewegt. Eine Drehrichtungsumkehr des Antriebsmotors 12 würde zu einer Vergrößerung der Umschlingung des scheibenförmigen Elementes 7 mit dem flexiblen Element 14 führen und zu einer Verkleinerung der Umschlingung durch das flexible Element 15 führen. Der Ventilstößel 2 würde folglich entgegen dem Pfeil 4 nach rechts bewegt werden.

In Figur 1 ist besonders gut zu erkennen, dass die Anbindungspunkte 16 und 17 exakt auf Höhe der Mittelachse 18 des Ventilstößels 2 angeordnet sind. Die flexiblen Elemente 14, 15 verlaufen somit genau parallel zur Mittelachse 18. Dies ist vorteilhaft, um keine Querkräfte oder störenden Momente in den Ventilstößel 2 einzuleiten. Es ist weiterhin zu erkennen, dass die Drehachse 8 des scheibenförmigen Elementes 7 genau soweit in der Höhe von der Mittelachse 18 des Ventilstößels 2 entfernt angeordnet ist, wie der Radius 19 des scheibenförmigen Elementes 7. Dies trägt dazu bei, dass die neutrale Faser der flexiblen Elemente 14, 15 exakt auf der Höhe der Mittelachse 18 verläuft, wodurch weiterhin die Erzeugung von unerwünschten Querkräften und störenden Momenten vermieden werden kann.

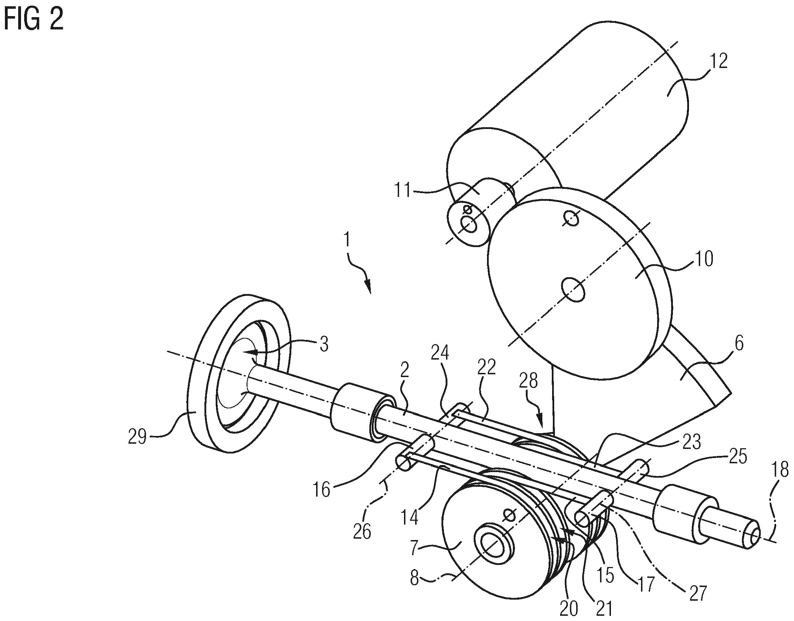

Die Figur 2 zeigt eine perspektivische Ansicht des Ventils 1 der Figur 1. Dementsprechend wurden dieselben Bezugszeichen für identische Teile verwendet und nötigenfalls neue Bezugszeichen eingeführt.

Zusätzlich zur Figur 1 sind in Figur 2 zwei weitere flexible Elemente 22, 23 gezeigt. Diese sind auf der rechten Seite des Ventilstößels 2 angeordnet und über die Anbindungspunkte 24, 25 mit dem Ventilstößel verbunden. Die Anbindungspunkte 16 und 24 sind konzentrisch entlang einer Achse 26 angeordnet, wobei die Achse 26 die Mittelachse 18 durchdringt und parallel zur Drehachse 8 ausgerichtet ist. Die Anbindungspunkte 17 und 25 sind konzentrisch entlang der Achse 27 angeordnet, wobei die Achse 27 ebenfalls parallel zur Drehachse 8 angeordnet ist und die Mittelachse 18 ebenfalls durchdringt.

Weiterhin ist ein zusätzliches scheibenförmiges Element 28 auf der rechten Seite des Ventilstößels 2 angeordnet. Die scheibenförmigen Elemente 7 und 28 sind starr miteinander verbunden und gemeinsam um die Drehachse 8 drehbar gelagert. Besonders bevorzugt sind die scheibenförmigen Elemente 7, 28 identisch.

Das scheibenförmige Element 7 weist zwei in Umfangsrichtung verlaufende Nuten 20, 21 auf, in welchen die flexiblen Elemente 14, 15 jeweils zumindest teilweise geführt werden. Die Nuten 20, 21 ermöglichen ein geordnetes Aufrollen beziehungsweise Abrollen der flexiblen Elemente 14, 15 von dem scheibenförmigen Element 7. Das scheibenförmige Element 28 ist spiegelsymmetrisch zum scheibenförmigen Element 7 aufgebaut. Die flexiblen Elemente 22, 23 sind durch am scheibenförmigen Element 28 in Umfangsrichtung verlaufende Nuten geführt.

Insgesamt sind so jeweils zwei Kraftangriffspunkte an dem Ventilstößel durch die Anbindungspunkte 16, 24 und 17, 25 definiert, die derart angeordnet sind, dass eine möglichst gleichmäßige Übertragung der Kräfte von dem Antriebsmotor 12 auf den Ventilstößel 2 realisiert wird. Somit wird das Entstehen von Kippmomenten und Querkräften am Ventilstößel fast vollständig vermieden beziehungsweise sehr stark reduziert.

Wie aus den Figuren 1 und 2 zu erkennen ist, sind die jeweils zwei flexiblen Elemente 14, 15 oder 22, 23 auf einer Seite des Ventilstößels 2 gegensinnig angeordnet, wodurch sowohl eine Bewegung entlang der Richtung 4 als auch entgegen der Richtung 4 mit den flexiblen Elementen 14, 15, 22 und 23, die jeweils nur Zugkräfte übertragen können, erreicht werden kann.

Über die Anordnung der Anbindungspunkte 16, 24, 17 und 25 auf Höhe der Mittelachse 18 und die exakt parallele Anordnung der flexiblen Elemente 14, 15, 22 und 23 wird erreicht, dass die Krafteinleitung in den Ventilstößel 2 exakt entlang der Bewegungsrichtung 4 des Ventilstößels 2 erfolgt.

Die Ausführungsbeispiele der Figuren 1 und 2 weisen insbesondere keinen beschränkenden Charakter auf und dienen der Verdeutlichung des Erfindungsgedankens. Auch über die konkrete Ausgestaltung der Figuren 1 und 2 hinausgehende Ausgestaltungen, insbesondere einzelne konstruktive Abänderungen, die dem Erfindungsgedanken folgen, sind ebenfalls von dem Schutzbereich der Erfindung eingeschlossen.

## Patentansprüche

1. Ventil (1) zum Öffnen und Schließen einer Strömungsstrecke, mit einem Antriebsmotor (12), mit einem Ventilteller (3), mit einem Ventilstößel (2) und mit einer Übersetzungsvorrichtung zur Übersetzung einer Rotationsbewegung des Antriebsmotors (12) in eine translatorische Bewegung des Ventiltellers (3), wobei der Ventilteller (3) mit dem Ventilstößel (2) verbunden ist und durch eine Bewegung des Ventilstößels (2) bewegbar ist, wobei die Übersetzungsvorrichtung aus flexiblen Elementen (14, 15, 22, 23) gebildet ist, wobei durch die flexiblen Elemente (14, 15, 22, 23) nur Zugkräfte übertragbar sind, **dadurch gekennzeichnet, dass** die Übersetzungsvorrichtung aus zumindest einem Zahnsegment (5) gebildet ist, wobei das Zahnsegment (5) durch eine Drehbewegung zumindest teilweise von dem flexiblen Elementen (14, 15, 22, 23) umschlingbar ist, und wobei das Zahnsegment (5) aus zwei scheibenförmigen Elementen (7, 28) gebildet ist, welche starr miteinander verbunden sind, wobei das erste scheibenförmige Element (7) links von dem Ventilstößel (2) angeordnet ist und das zweite scheibenförmige Element (28) rechts von dem Ventilstößel (2) angeordnet ist, wobei jedes der scheibenförmigen Elemente (7, 28) zwei parallel zueinander in Umfangsrichtung verlaufende Nuten (20, 21) am äußeren Umfang aufweist, wobei in jeder der Nuten (20, 21) ein flexibles Element (14, 15, 22, 23) geführt ist.

2. Ventil (1) nach Anspruch 1, **dadurch gekennzeichnet, dass** die Übersetzungsvorrichtung zumindest zwei erste flexible Elemente (14, 22) und zwei zweite flexible Elemente (15, 23) aufweist, wobei durch eine Drehbewegung des Zahnsegmentes (5) in eine Richtung der durch die ersten flexiblen Elemente (14, 22) umschlungene Anteil des Zahnsegmentes (5) vergrößerbar ist und der durch die zweiten flexiblen Elemente (15, 23) umschlungene Anteil des Zahnsegmentes (5) verkleinerbar ist.

3. Ventil (1) nach einem der vorhergehenden Ansprüche, **dadurch gekennzeichnet, dass** jedes flexible Element (14, 15, 22, 23) jeweils mit dem Ventilstößel (2) und mit dem Zahnsegment (5, 7, 28) fest verbunden ist.

4. Ventil (1) nach einem der vorhergehenden Ansprüche, **dadurch gekennzeichnet, dass** die jeweils zwei flexiblen Elemente (14, 15, 22, 23) gegensinnig zueinander angeordnet sind.

5. Ventil (1) nach einem der vorhergehenden Ansprüche, **dadurch gekennzeichnet, dass** das Zahnsegment (5, 7, 28) um eine Drehachse (8) drehbar gelagert ist, wobei die Drehachse (8) des Zahnsegmentes (5, 7, 28) in einer tangentialen Richtung zur Mittelachse (18) des Ventilstößels (2) angeordnet ist.

6. Ventil (1) nach einem der vorhergehenden Ansprüche, **dadurch gekennzeichnet, dass** der Achsabstand (19) zwischen der Drehachse (8) des Zahnsegmentes (5, 7, 28) und der Mittelachse (18) des Ventilstößels (2) dem halben Abrolldurchmesser (19) der flexiblen Elemente (14, 15, 22, 23) auf dem Zahnsegment (5, 7, 28) entspricht.

7. Ventil (1) nach einem der vorhergehenden Ansprüche, **dadurch gekennzeichnet, dass** die flexiblen Elemente (14, 15, 22, 23) durch Bowdenzüge und/oder Seile und/oder Stahlbänder und/oder Rollfedern und/oder Ketten und/oder zugfestes Gewebeband gebildet sind.

8. Ventil (1) nach einem der vorhergehenden Ansprüche, **dadurch gekennzeichnet, dass** die flexiblen Elemente (14, 15, 22, 23) an ihrem Anbindungspunkt am Zahnsegment (5, 7, 28) in das Zahnsegment (5, 7, 28) eingespritzt sind.

9. Ventil (1) nach einem der vorhergehenden Ansprüche, **dadurch gekennzeichnet, dass** die Abstände der flexiblen Elemente (14, 15, 22, 23) zur Mittelachse (18) des Ventilstößels (2) rechts und links symmetrisch zueinander sind.

10. Ventil (1) nach einem der vorhergehenden Ansprüche, **dadurc**h **gekennzeichnet**, dass zumindest eines der flexiblen Elemente (14, 15, 22, 23) durch eine Vorrichtung mit einer Vorspannkraft beaufschlagt ist, wobei die Vorrichtung am Zahnsegment (5, 7, 28) und/oder am Ventilstößel (2) angeordnet ist.

## Claims

1. Valve (1) for opening and closing a flow path, comprising a drive motor (12), comprising a valve disk (3), comprising a valve tappet (2) and comprising a transmission device for converting rotational movement of the drive motor (12) into translatory movement of the valve disk (3), wherein the valve disk (3) is connected to the valve tappet (2) and is able to be moved by way of movement of the valve tappet (2), wherein the transmission device is formed from flexible elements (14, 15, 22, 23), wherein only tensile forces are able to be transmitted by the flexible elements (14, 15, 22, 23), **characterized in that** the transmission device is formed from at least one toothed segment (5), wherein the toothed segment (5) is able to be at least partially wrapped around by the flexible elements (14, 15, 22, 23) by way of rotational movement, and wherein the toothed segment (5) is formed from two disk-shaped elements (7, 28) which are connected rigidly to one another, wherein the first disk-shaped element (7) is arranged on the left of the valve tappet (2) and the second disk-shaped element (28) is arranged on the right of the valve tappet (2), wherein each of the disk-shaped elements (7, 28) has two grooves (20, 21) which extend in the circumferential direction parallel to one another at the outer circumference, wherein a flexible element (14, 15, 22, 23) is guided in each of the grooves (20, 21).

2. Valve (1) according to Claim 1, **characterized in that** the transmission device has at least two first flexible elements (14, 22) and two second flexible elements (15, 23), wherein, by way of rotational movement of the toothed segment (5) in one direction, that proportion of the toothed segment (5) which is wrapped around by the first flexible elements (14, 22) is able to be increased and that proportion of the toothed segment (5) which is wrapped around by the second flexible elements (15, 23) is able to be reduced.

3. Valve (1) according to one of the preceding claims, **characterized in that** each flexible element (14, 15, 22, 23) is in each case connected fixedly to the valve tappet (2) and to the toothed segment (5, 7, 28).

4. Valve (1) according to one of the preceding claims, **characterized in that** the in each case two flexible elements (14, 15, 22, 23) are arranged so as to be in opposite directions to one another.

5. Valve (1) according to one of the preceding claims, **characterized in that** the toothed segment (5, 7, 28) is mounted so as to be rotatable about an axis of rotation (8), wherein the axis of rotation (8) of the toothed segment (5, 7, 28) is arranged in a tangential direction to the central axis (18) of the valve tappet (2).

6. Valve (1) according to one of the preceding claims, **characterized in that** the axis-to-axis distance (19) between the axis of rotation (8) of the toothed segment (5, 7, 28) and the central axis (18) of the valve tappet (2) corresponds to half of the rolling-off diameter (19) of the flexible elements (14, 15, 22, 23) on the toothed segment (5, 7, 28).

7. Valve (1) according to one of the preceding claims, **characterized in that** the flexible elements (14, 15, 22, 23) are formed by Bowden cables and/or cables and/or steel strips and/or scroll springs and/or chains and/or tension-resistant fabric strip.

8. The valve (1) according to one of the preceding claims, **characterized in that** the flexible elements (14, 15, 22, 23) are injection-molded into the toothed segment (5, 7, 28) at their attachment point on the toothed segment (5, 7, 28).

9. Valve (1) according to one of the preceding claims, **characterized in that** the spacings of the flexible elements (14, 15, 22, 23) to the central axis (18) of the valve tappet (2) on the right and on the left are symmetrical with respect to one another.

10. Valve (1) according to one of the preceding claims, **characterized in that** at least one of the flexible elements (14, 15, 22, 23) is loaded with a preload force by a device, wherein the device is arranged at the toothed segment (5, 7, 28) and/or at the valve tappet (2).

## Revendications

1. Soupape (1) destinée à ouvrir et fermer une voie d'écoulement, comprenant un moteur d'entraînement (12), un disque de soupape (3), un poussoir de soupape (2) et un dispositif de transmission pour la conversion d'un mouvement de rotation du moteur d'entraînement (12) en un mouvement de translation du disque de soupape (3), le disque de soupape (3) étant relié au poussoir de soupape (2) et étant déplaçable par un déplacement du poussoir de soupape (2), le dispositif de transmission étant formé à partir d'éléments souples (14, 15, 22, 23),
seulement des forces de traction pouvant être transmises au moyen des éléments souples (14, 15, 22, 23),
**caractérisée en ce que** le dispositif de transmission est formé à partir d'au moins un segment denté (5), le segment denté (5) pouvant être enlacé au moins partiellement par les éléments souples (14, 15, 22, 23) par un mouvement rotatif, et le segment denté (5) étant formé à partir de deux éléments (7, 28) en forme de disques, lesquels sont reliés rigidement l'un à l'autre, le premier élément (7) en forme de disque étant disposé à gauche du poussoir de soupape (2) et le deuxième élément (28) en forme de disque étant disposé à droite du poussoir de soupape (2), chacun des éléments (7, 28) en forme de disques comprenant deux rainures (20, 21) s'étendant parallèlement l'une à l'autre dans la direction périphérique sur la périphérie extérieure, un élément souple (14, 15, 22, 23) étant guidé dans chacune des rainures (20, 21).

2. Soupape (1) selon la revendication 1, **caractérisée en ce que** le dispositif de transmission comprend au moins deux premiers éléments souples (14, 22) et deux deuxièmes éléments souples (15, 23), la partie du segment denté (5) enlacée par les premiers éléments souples (14, 22) pouvant être agrandie et la partie du segment denté (5) enlacée par les deuxièmes éléments souples (15, 23) pouvant être diminuée par un mouvement rotatif du segment denté (5) dans un sens.

3. Soupape (1) selon l'une des revendications précédentes, **caractérisée en ce que** chaque élément souple (14, 15, 22, 23) est relié solidement respectivement au poussoir de soupape (2) et au segment denté (5, 7, 28).

4. Soupape (1) selon l'une des revendications précédentes, **caractérisée en ce que** les deux éléments souples respectifs (14, 15, 22, 23) sont disposés en sens inverses l'un par rapport à l'autre.

5. Soupape (1) selon l'une des revendications précédentes, **caractérisée en ce que** le segment denté (5, 7, 28) est monté rotatif autour d'un axe de rotation (8), l'axe de rotation (8) du segment denté (5, 7, 28) étant disposé dans une direction tangentielle par rapport à l'axe médian (18) du poussoir de soupape (2).

6. Soupape (1) selon l'une des revendications précédentes, **caractérisée en ce que** l'entraxe (19) entre l'axe de rotation (8) du segment denté (5, 7, 28) et l'axe médian (18) du poussoir de soupape (2) correspond à la moitié du diamètre de roulement (19) des éléments souples (14, 15, 22, 23) sur le segment denté (5, 7, 28).

7. Soupape (1) selon l'une des revendications précédentes, **caractérisée en ce que** les éléments souples (14, 15, 22, 23) sont formés par des câbles Bowden et/ou des câbles et/ou des bandes en acier et/ou des ressorts à col de cygne et/ou des chaînes et/ou une bande textile résistante à la traction.

8. Soupape (1) selon l'une des revendications précédentes, **caractérisée en ce que** les éléments souples (14, 15, 22, 23) sont moulés par injection dans le segment denté (5, 7, 28) au niveau de leur point de liaison au segment denté (5, 7, 28).

9. Soupape (1) selon l'une des revendications précédentes, **caractérisée en ce que** les distances des éléments souples (14, 15, 22, 23) à l'axe médian (18) du poussoir de soupape (2) à droite et à gauche sont symétriques l'une par rapport à l'autre.

10. Soupape (1) selon l'une des revendications précédentes, **caractérisée en ce qu'**au moins l'un des éléments souples (14, 15, 22, 23) est soumis à une force de précontrainte au moyen d'un dispositif, le dispositif étant disposé au niveau du segment denté (5, 7, 28) et/ou du poussoir de soupape (2).
